# EUROPÄISCHE PATENTSCHRIFT

(11) **EP 3 922 489 B1**
(45) Veröffentlichungstag und Bekanntmachung des Hinweises auf die Patenterteilung: **04.09.2024**
(21) Anmeldenummer: 21176993.0
(22) Anmeldetag: 31.05.2021
(51) Int. Cl.: B60G 3/10, B60G 11/08

(54) **X-FEDEREINRICHTUNG FÜR EINE KRAFTFAHRZEUG-RADAUFHÄNGUNG**
X SUSPENSION DEVICE FOR A MOTOR VEHICLE WHEEL SUSPENSION
DISPOSITIF DE RESSORT X POUR UNE SUSPENSION DE ROUE DE VÉHICULE AUTOMOBILE

(30) Priorität: 08.06.2020 DE 102020207153
(43) Veröffentlichungstag der Anmeldung: 15.12.2021
(73) Patentinhaber: VOLKSWAGEN AG, 38440 Wolfsburg (DE)
(72) Erfinder: Rosenmeyer, Vicky, 38124 Braunschweig (DE); Fiebig, Sierk, 38106 Braunschweig (DE); Schiewek, Michael, 29331 Lachendorf (DE); Glaubitz, Florian, 38176 Wendeburg (DE); Wolf, Stefan, 38100 Braunschweig (DE); Bartz, Ronald, 38106 Braunschweig (DE)

(56) Entgegenhaltungen:
- EP-A1- 2 639 087
- DE-A1- 102016 220 325
- DE-A1- 102018 202 353
- DE-A1- 2 451 671
- FR-A1- 2 484 926
- JP-A- H 058 625
- JP-B2- 5 249 840
- US-A- 2 496 906

## Beschreibung

Die Erfindung bezieht sich auf eine X-Federeinrichtung für eine Kraftfahrzeug-Radaufhängung, umfassend je Radseite eine erste Blattfeder und eine zweite Blattfeder aus faserverstärktem Kunststoff, welche übereinanderliegend angeordnet sind, wobei die erste Blattfeder mit einem Ende radseitig abstützbar ist und die zweite Blattfeder mit einem Ende fahrzeugaufbauseitig abstützbar ist, und eine erste Befestigungseinrichtung, an welcher die erste Blattfeder und die zweite Blattfeder zusammengeführt und eingespannt sind, und welche ein Lager zur fahrzeugaufbauseitigen schwenkbaren Lagerung aufweist.

Gattungsgemäße X-Federeinrichtungen der eingangs genannten Art sind aus DE 10 2016 220 325 A1 und DE 10 2018 215 111 B3 bekannt. Bei diesen sind die ersten Befestigungseinrichtungen beider Radseiten in Fahrzeugmitte durch ein Schwenkgelenk miteinander gekoppelt, dessen Schwenkachse in Fahrzeuglängsrichtung verläuft. Hierdurch kann die Wirkung eines Stabilisators erzielt werden. Auf einen separaten Stabilisator kann folglich verzichtet werden.

Eine gattungsgemäße entsprechend des Oberbegriffs des Anspruchs 1 ausgeführte X-Federeinrichtung der eingangs genannten Art ist ferner aus DE 10 2018 202 353 A1 bekannt. Die ersten Befestigungseinrichtungen beider Radseiten sind hier nicht durch ein Schwenkgelenk gekoppelt, sondern lediglich am Fahrzeugaufbau angelenkt. Eine Stabilisatorfunktion ist dadurch nicht vorhanden.

Ferner ist aus EP 2 639 087 A1 und DE 24 51 671 A1 bekannt, Querlenker gegenüberliegender Radseiten durch eine Querblattfeder miteinander zu verbinden. Die Querlenker sind hier jedoch als starre Querlenker ausgeführt und können daher selber nicht einfedern.

Aus der DE 10 2012 219 002 A1 ist zudem eine durchgehende Blattfeder vorbekannt.

Der Erfindung liegt die Aufgabe zugrunde, bei einer gattungsgemäßen X-Federeinrichtung Alternativen für die Bereitstellung einer Stabilisatorfunktion aufzuzeigen.

Diese Aufgabe wird durch eine X-Federeinrichtung gemäß Patentanspruch 1 gelöst.

Die erfindungsgemäße X-Federeinrichtung zeichnet sich dadurch aus, dass die ersten Befestigungseinrichtungen beider Radseiten anstatt über ein Schwenkgelenk nunmehr durch eine Feder untereinander verbunden sind.

Hierdurch lässt sich die Stabilisatorwirkung an der X-Federeinrichtung besser abstimmen.

Überdies ergeben sich aus der Verwendung einer Feder anstelle eines Schwenkgelenks Bauraumvorteile, da diese weniger Platz als ein Schwenkgelenk benötigt und variabler positioniert werden kann.

Dies kann insbesondere dann von Vorteil sein, falls der relevante Bauraum durch eine Abgasanlage und/oder eine Reserveradmulde eingeschränkt werden sollte.

In einer ersten Ausführungsvariante sind die ersten Blattfedern beider Radseiten, also jene Blattfedern, welche vorliegend mit einem Ende radseitig angebunden sind, durch Teilabschnitte einer durchgehenden Blattfeder gebildet, wobei die die ersten Befestigungseinrichtungen beider Radseiten verbindende Feder durch einen Mittelabschnitt dieser durchgehenden Blattfeder gebildet wird. In diesem Fall wird somit lediglich ein Bauteil benötigt, um die Funktion der beiden ersten Blattfedern und der Verbindungsfeder darzustellen.

Diese durchgehende Blattfeder kann in Bezug auf die Einbaulage an einem Kraftfahrzeug unter den Lagern der ersten Befestigungseinrichtungen beider Radseiten hindurch verlaufen. Die Lager der ersten Befestigungseinrichtungen können entsprechend hochliegend angeordnet werden, was für die Bodenfreiheit des Kraftfahrzeugs von Vorteil ist.

In einer zweiten Ausführungsvariante sind die zweiten Blattfedern beider Radseiten durch Teilabschnitte einer durchgehenden Blattfeder gebildet, während die die ersten Befestigungseinrichtungen beider Radseiten verbindende Feder durch einen Mittelabschnitt dieser durchgehenden Blattfeder gebildet wird. Auch in diesem Fall wird somit lediglich ein Bauteil benötigt, um die Funktion der beiden zweiten Blattfedern und der Verbindungsfeder darzustellen.

Diese durchgehende Blattfeder kann in Bezug auf die Einbaulage an einem Kraftfahrzeug über den Lagern der ersten Befestigungseinrichtungen beider Radseiten hinweg verlaufend angeordnet sein. Dies ist beispielsweise im Hinblick auf die Vorbeiführung einer Abgasanlage von Vorteil.

Im Hinblick auf die Abstimmung der Stabilisatorwirkung kann gemäß einer Ausführung der Erfindung die Feder zwischen den ersten Befestigungseinrichtungen beider Radseiten eine Taillierung aufweisen. Dies betrifft die durchgehenden Blattfedern in ihrem Mittelabschnitt.

Weiterhin wird vorliegend ein Kraftfahrzeug mit einer Kraftfahrzeug-Radaufhängung gemäß Patentanspruch 5 vorgeschlagen. Diese umfasst eine X-Federeinrichtung der vorstehend erläuterten Art, wobei die ersten und zweiten Blattfedern sich jeweils in Fahrzeugquerrichtung erstrecken oder mit dieser bei Betrachtung in einer horizontalen Ebene einen Winkel von maximal +/-15° einschließen. In Blickrichtung der Längsrichtung des Kraftfahrzeugs ergibt sich damit ein X-förmiges Federsystem, dessen Arme durch die genannten Blattfedern gebildet werden. Hierdurch wird eine besonders leichte und kostengünstige Achse für ein Kraftfahrzeug geschaffen. Die erfindungsgemäße Lösung eignet sich insbesondere für Hinterachsen von Personenkraftfahrzeugen und leichten Nutzfahrzeugen, ohne jedoch hierauf beschränkt zu sein.

Insbesondere kann die erfindungsgemäße X-Federeinrichtungen wie in DE 10 2016 220 325 A1 und DE 10 2018 215 111 B3 beschrieben weitergebildet werden. Dies gilt vor allem für die räumliche Anordnung sowie die Anbindung der Enden der ersten und zweiten Blattfedern am Fahrzeugaufbau sowie an einem Radträger.

Nachfolgend wird die Erfindung anhand von in der Zeichnung dargestellten Ausführungsbeispielen näher erläutert. Die Zeichnung zeigt in:
- Figur 1: eine räumliche Ansicht eines Ausführungsbeispiel einer X-Federeinrichtung der ersten Ausführungsvariante nach der Erfindung in Einbaulage an einem Kraftfahrzeug bei Ruhestellung des Fahrzeugs auf einer horizontalen Fläche,
- Figur 2: eine Seitenansicht der X-Federeinrichtung aus Fig. 1 mit Blick in Vorwärtsfahrtrichtung, und in
- Figur 3: eine Ansicht analog Fig. 2 eines Ausführungsbeispiels der X-Federeinrichtung der zweiten Ausführungsvariante nach der Erfindung .

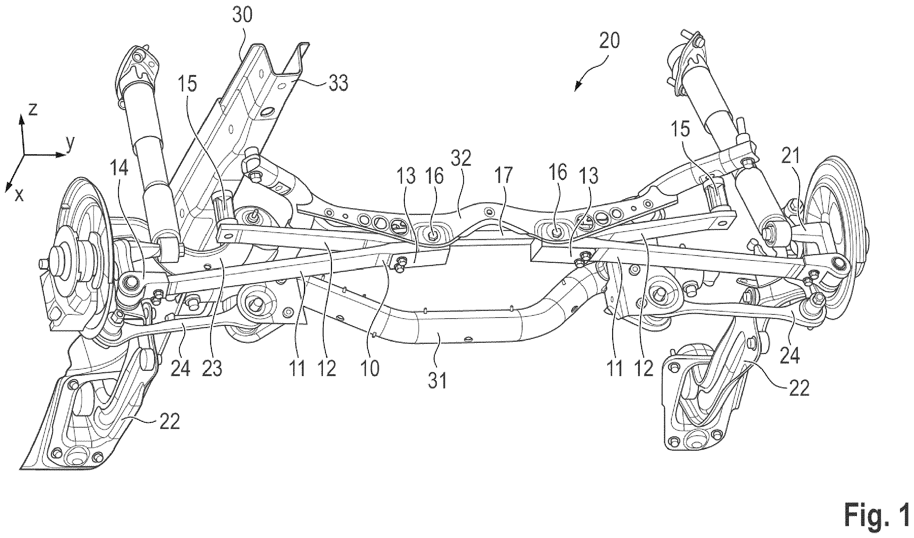

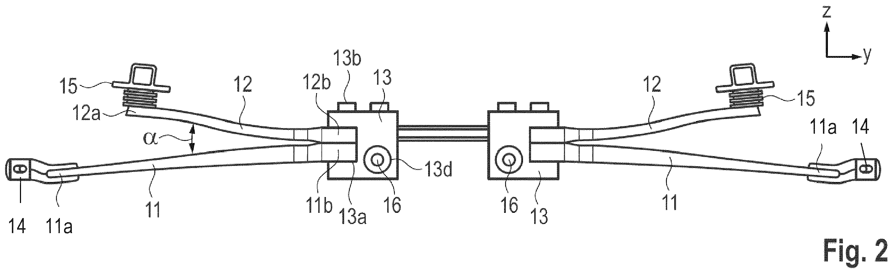

Das in den Figuren 1 und 2 dargestellte erste Ausführungsbeispiel zeigt eine X-Federeinrichtung 10 für eine Kraftfahrzeug-Radaufhängung in Einbaulage an einem Kraftfahrzeug, insbesondere Personenkraftfahrzeug oder leichten Nutzfahrzeug.

Die X-Federeinrichtung 10 weist je Radseite eine erste Blattfeder 11 und eine zweite Blattfeder 12 auf. Beide Blattfedern 11 und 12 sind aus einem faserverstärkten Kunststoff, beispielsweise glasfaserverstärktem Kunststoff (GFK) oder kohlefaserverstärktem Kunststoff (CFK) gefertigt.

Die erste und zweite Blattfeder 11 und 12 sind übereinanderliegend angeordnet, so dass in Bezug auf eine Fahrzeughochrichtung z die zweite Blattfeder 12 über der ersten Blattfeder 11 verläuft.

Bei dem dargestellten Ausführungsbeispiel weisen die ersten und zweiten Blattfedern 11 und 12 unterschiedliche Längen auf. So besitzt die erste, untenliegende Blattfeder 11 eine größere Länge als die zweite, obenliegende Blattfeder 12.

Beide Blattfedern 11 und 12 je Radseite sind an einer ersten Befestigungseinrichtung 13 zur fahrzeugaufbauseitigen Abstützung zusammengeführt.

Vorliegend schließen die die Haupterstreckungsrichtung der ersten Blattfeder 11 und die Haupterstreckungsrichtung der zweiten Blattfeder 12 - in entspanntem Zustand der X-Federeinrichtung 10 gemäß Figur 1 und 2 - in einer durch die Fahrzeugquerrichtung y und Fahrzeughochrichtung z aufgespannten yz-Ebene einen spitzen Winkel α ein. Dieser spitze Winkel α liegt vorzugsweise in einem Bereich von 15° bis 35°, so dass einerseits eine geringe Einbauhöhe gewährleistet werden kann, andererseits jedoch ein hinreichendes Einfederungspotenzial zur Energieabsorption zur Verfügung steht.

Ferner weist die erste Blattfeder 11 an einem Endabschnitt 11a eine zweite Befestigungseinrichtung 14 zur radseitigen Abstützung und die zweite Blattfeder 12 eine dritte Befestigungseinrichtung 15 zur aufbauseitigen Abstützung auf.

Die zweite Befestigungseinrichtung 14 dient der radseitigen Abstützung beispielsweise an einem Radträger 21 oder einem Radführungsglied.

Über die dritte Befestigungseinrichtung 15 kann eine Abstützung von unten an einem Längsträger 33 eines Fahrzeugaufbaus 30 erfolgen.

Aufgrund der kürzeren Länge der zweiten Blattfeder 12 liegt deren fahrzeugaufbauseitige Abstützungsstelle am freien Endabschnitt 12a in Fahrzeugquerrichtung y näher zur Fahrzeugmitte als die radseitige Abstützungsstelle der ersten Blattfeder 11.

Die erste Befestigungseinrichtung 13 zur fahrzeugaufbauseitigen Abstützung befindet sich im Bereich der zusammengeführten Abschnitte 11b und 12b der ersten und zweiten Blattfeder 11 und 12. Die X-Federeinrichtung 10 ist im Bereich der zusammengeführten Abschnitte 11b und 12b unmittelbar am Fahrzeugaufbau 30 oder an einer fahrzeugaufbaufesten Struktur wie beispielsweise einem Hilfsrahmen 31 oder dergleichen schwenkbar gelagert.

Die erste und zweite Blattfeder 11 und 12 können an ihren zusammengeführten Abschnitten 11b und 12b unmittelbar miteinander verspannt sein.

Bei dem in Figur 1 dargestellten Ausführungsbeispiel weist die erste Befestigungseinrichtung 13 eine Einspannung 13a zum gegenseitigen Verspannen der zusammengeführten Abschnitte 11b und 12b der ersten und zweiten Blattfeder 11 und 12 auf. Mittels der Einspannung 13a kann eine Drehbewegung der ersten Blattfeder 11, welche aus einem Einfedern und einer Verformung derselben resultiert, an die zweite Blattfeder 12 übertragen werden und umgekehrt.

Die Einspannung 13a kann beispielsweise als gabelförmige Klaue ausgeführt sein, in welcher die der zusammengeführten Abschnitte 11b und 12b der ersten und zweiten Blattfeder 11 und 12 aufgenommen sind. Die Ausgestaltung der Einspannung 13a ist jedoch nicht auf die Form einer solchen Klaue beschränkt. Vielmehr sind hier auch andere Ausgestaltungsformen möglich. Ein Verspannen kann mittels Spannbolzen 13b erfolgen. Über entsprechende Flanschabschnitte 13c der Klaue wird eine gleichmäßige Verteilung der Spannkraft über die Oberfläche der der zusammengeführten Abschnitte 11b und 12b erzielt.

Weiterhin ermöglicht die erste Befestigungseinrichtung 13 eine schwenkbare Lagerung der Federeinrichtung 10. Die erste Befestigungseinrichtung 13 weist dazu eine Aufnahme 13d für ein Lager 16 zur schwenkbaren Abstützung am Fahrzeugaufbau 30 oder einem am Fahrzeugaufbau vorgesehenen Hilfsrahmen 31 auf. Bei dem dargestellten Ausführungsbeispiel ist hierzu beispielhaft ein Lagerauge in die erste Befestigungseinrichtung 13 integriert. Als Aufnahme 13d für ein Lager kann jedoch beispielsweise auch ein Lagerbolzen oder dergleichen dienen, über den eine schwenkbare Lagerung realisierbar ist. Die Schwenkachse verläuft hierbei parallel oder winklig bis zu +/-15° zur Fahrzeuglängsrichtung x.

Erfindungsgemäß sind die ersten Befestigungseinrichtungen 13 beider Radseiten durch eine Feder 17 untereinander verbunden sind, welche vorliegend vorzugsweise als Biegefeder, insbesondere stabförmige Biegefeder ausgebildet ist. Diese Feder 17 ist derart konfiguriert und angeordnet, um einem gegenseitigen Einfedern beider Radseiten zunehmend entgegenzuwirken, d.h. im Sinne einer Rückstellung in die in den Figuren 1 und 2 gezeigte Ruhestellung zu wirken. Hierdurch kann ein separater Stabilisator entfallen.

Im Vergleich zu einem herkömmlichen Schwenkgelenk lässt sich über eine solche Feder 17 die Stabilisatorwirkung an der X-Federeinrichtung 10 besser abstimmen. Zudem ergeben sich Bauraumvorteile, da eine Feder 17 im Vergleich zu einem Schwenkgelenk weniger Platz benötigt und variabler positioniert werden kann.

Bei dem in den Figuren 1 und 2 dargestellten ersten Ausführungsbeispiel werden die zweiten Blattfedern 12 beider Radseiten durch eine einzige durchgehende Blattfeder gebildet, welche gleichzeitig auch die die ersten Befestigungseinrichtungen 13 beider Radseiten verbindende Feder 17 bildet. Vorliegend sind diese drei Federn 12 und 17 in ein einziges Bauteil integriert. Die Feder 17 wird durch einen Mittelabschnitt der durchgehenden Blattfeder bereitgestellt, während die beiden zweiten Blattfedern 12 äußere Teilabschnitte derselben sind.

Wie den Figuren 1 und 2 entnommen werden kann, verläuft die durchgehende Blattfeder (12, 17, 12) in Bezug auf die Einbaulage an einem Kraftfahrzeug über den Lagern 16 der ersten Befestigungseinrichtungen 13 beider Radseiten hinweg, wodurch ein großer Abstand zu einem Abgasstrang möglich wird.

Figur 1 zeigt den Einbau der X-Federeinrichtung 10 in eine Kraftfahrzeug-Radaufhängung 20.

Die Radaufhängung 20 umfasstje Fahrzeugrad einen Radträger 21, welcher über mehrere Radführungsglieder, beispielsweise in Form von Quer- und Längslenkern 22, 23, 24, gegen den Fahrzeugaufbau 30 oder eine fahrzeugaufbaufeste Struktur wie einen Hilfsrahmen 31 abgestützt ist.

Die vorliegende Radaufhängung 20 kommt ohne eine Schraubenfeder zur Abstützung der Fahrzeugmasse aus. Deren Funktion wird vorliegend durch die X-Federeinrichtung 10 übernommen. Es ist jedoch möglich, in einer Radaufhängung 20, welche eine X-Federeinrichtung 10 der oben erläuterten Art beinhaltet, zusätzlich herkömmliche Schraubenfedern zur Abstützung der Fahrzeugmasse einzusetzen.

Die dargestellte Radaufhängung 20 ist lediglich beispielhafter Natur, um die Einbaulage der X-Federeinrichtung 10 in einer solchen näher zu erläutern. Es muss daher ausdrücklich betont werden, dass entsprechende X-Federeinrichtungen 10 auch in anderen Radaufhängungen 20 als dargestellt zum Einsatz kommen können, um die Masse des Fahrzeugaufbaus gegen die Fahrzeugräder abzustützen und gegebenenfalls zusätzlich Radführungsaufgaben zu übernehmen.

Die oben erläuterte X-Federeinrichtung 10 ist derart in die Radaufhängung 20 eingebaut, dass sich die ersten und zweiten Blattfedern 11 und 12 jeweils in Fahrzeugquerrichtung y erstrecken oder mit der Fahrzeugquerrichtung y bei Betrachtung in einer Horizontalebene xy einen Winkel von maximal +/-15° einschließen.

Die erste Blattfeder 11 liegt dabei in Bezug auf die Fahrzeughochrichtung z unter der zweiten Blattfeder 12.

Ferner erstreckt sich die X-Federeinrichtung 10 sehr weit in Richtung Fahrzeugmitte, wodurch sich für die ersten und zweiten Blattfedern 11 und 12 eine große Länge mit entsprechend hohem Energieabsorptionsvermögen ergibt. Durch die gewählte X-Form bleibt die Bauhöhe in Fahrzeughochrichtung z gering.

In Ruhestellung des Fahrzeugs auf einer horizontalen Fläche horizontal verlaufen die ersten Blattfedern 11 überwiegend horizontal, d.h. sie schließen mit der Horizontalebene xy einen Winkel von maximal +/- 10° ein.

Wie Figur 1 zeigt, kann die X-Federeinrichtung 10 mittels der ersten Befestigungseinrichtungen 13 an einer Querstrebe 32 des Hilfsrahmens 31 gelenkig angebunden sein.

Um eine möglichst große Länge der X-Federeinrichtung 10 in Fahrzeugquerrichtung y zu erzielen, werden die ersten Befestigungseinrichtungen 13 in Fahrzeugquerrichtung y bezogen auf die Spurweite des Fahrzeugs vorzugsweise in einem mittleren Drittel, und weiter bevorzugt in einem mittleren Fünftel, um die Längsmittelachse des Fahrzeugs angeordnet. Die Anbindung am Hilfsrahmen 31 erfolgt beispielsweise über ein als Gummilager ausgeführtes Lager 16 in der Aufnahme 13d der ersten Befestigungseinrichtung 13, so dass die Blattfederpaare jeder Radseite jeweils um eine im Winkel von bis zu +/- 15° zur Fahrzeuglängsrichtung x verlaufende Drehachse schwenken können.

Die X-Federeinrichtung 10 kann über ein weiteres Gummilager schwenkbar am Radträger 21 angebunden werden. Dieses weitere Gummilager koppelt den außenliegenden Endabschnitt 11a der ersten Blattfeder 11 gelenkig mit dem Radträger 21, wobei die zugehörige Schwenkachse des so gebildeten Gelenks ebenfalls überwiegend in Fahrzeuglängsrichtung x verläuft. Es ist jedoch auch möglich, den außenliegenden Endabschnitt 11a der ersten Blattfeder 11 beispielsweise in einer Einspannung am Radträger 21 aufzunehmen, d.h. ungelenkig zu befestigen.

Schließlich stützt sich die X-Federeinrichtung 10 mit dem Endabschnitt 12a der zweiten Blattfeder 12 am Fahrzeugaufbau 30 ab. Hierdurch wird die aufbauseitige Krafteinleitung auf zwei Stellen verteilt. Eine solche Abstützung der zweiten Blattfeder 12 kann beispielsweise, wie in Figur 1 gezeigt, an einem Längsträger 33 des Fahrzeugaufbaus 30 erfolgen. Die Abstützung ist dabei vorzugsweise von unten vorgenommen.

Die Erfindung ermöglicht eine flachbauende Kraftfahrzeugachse mit niedriger Kofferraum- bzw. Laderaumkante und hoher Kofferraum- bzw. Laderaumbreite.

Der Gewichtsvorteil der Blattfedern 11 und 12 aus faserverstärktem Kunststoff kann praktisch vollständig in eine Gewichtsverminderung des Fahrzeuggewichts übersetzt werden, da im Bereich der aufbauseitigen Anbindung der X-Federeinrichtungen 10 keine gewichtserhöhenden Versteifungsmaßnahmen erforderlich werden, welche den Gewichtsvorteil der X-Federeinrichtungen 10 mit ersten und zweiten Blattfedern 11 und 12 aus faserverstärktem Kunststoff beeinträchtigen würden.

Über die Federverbindung der beiden radseitigen Blattfederstrukturen lässt sich die Stabilisatorwirkung über einen großen Bereich hinweg sehr variabel abstimmen. Mit einem herkömmlichen Schwenkgelenk wäre dies nicht möglich.

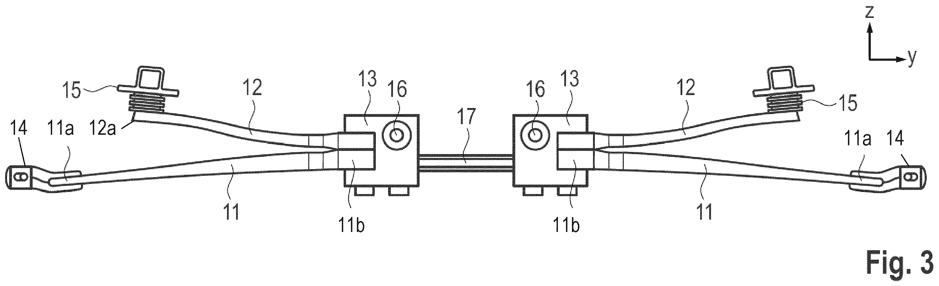

Figur 3 zeigt ein zweites Ausführungsbeispiel, welches sich von dem ersten Ausführungsbeispiel dadurch unterscheidet, dass hier die ersten Blattfedern 11 beider Radseiten sowie die verbindende Feder 17 in eine durchgehende Blattfeder integriert sind, d.h. einstückig ausgebildet sind.

Anders ausgedrückt werden bei dem zweiten Ausführungsbeispiel die ersten Blattfedern 11 beider Radseiten durch Teilabschnitte der durchgehenden Blattfeder gebildet, während die die ersten Befestigungseinrichtungen 13 beider Radseiten verbindende Feder 17 durch einen Mittelabschnitt dieser durchgehenden Blattfeder gebildet wird.

Die durchgehende Blattfeder kann in Bezug auf die Einbaulage an einem Kraftfahrzeug unter den Lagern 16 der ersten Befestigungseinrichtungen 13 beider Radseiten hindurch verlaufen. Hierdurch wird nach oben hin mehr Freiraum geschaffen, was insbesondere bei Fahrzeugen ohne Abgasstrang von Vorteil sein kann.

Im Übrigen entspricht das zweite Ausführungsbeispiel dem ersten Ausführungsbeispiel.

Zur Abstimmung der Stabilisatorwirkung kann optional die Feder 17 zwischen den ersten Befestigungseinrichtungen 13 beider Radseiten eine Taillierung aufweisen. Dies betrifft die durchgehenden Blattfedern der ersten beiden Ausführungsbeispiele in ihrem Mittelabschnitt.

Die Erfindung wurde vorstehend anhand von Ausführungsbeispielen und weiteren Abwandlungen näher erläutert. Die Ausführungsbeispiele und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

### Bezugszeichenliste

| | | | |
|---|---|---|---|
| 10 | X-Federeinrichtung | | |
| 11 | erste Blattfeder | | |
| 12 | zweite Blattfeder | | |
| 11a | (außenliegender) Endabschnitt der ersten Blattfeder 11 | | |
| 11b | zusammengeführter Abschnitt der ersten Blattfeder 11 | | |
| 12b | (außenliegender) Endabschnitt der zweiten Blattfeder 11 | | |
| 12b | zusammengeführter Abschnitt der zweiten Blattfeder 12 | | |
| 13 | erste Befestigungseinrichtung | | |
| 13a | Einspannung | | |
| 13b | Spannbolzen | | |
| 13c | Flanschabschnitt | | |
| 13d | Lageraufnahme | | |
| 14 | zweite Befestigungseinrichtung | | |
| 15 | dritte Befestigungseinrichtung | | |
| 16 | Lager | | |
| 17 | Feder | | |
| 20 | Kraftfahrzeugradaufhängung | | |
| 21 | Radträger | | |
| 22 | Längslenker | | |
| 23 | oberer Querlenker | | |
| 24 | unterer Querlenker | | |
| 30 | Fahrzeugaufbau | | |
| 31 | Hilfsrahmen | | |
| 32 | Querstrebe | | |
| 33 | Längsträger | | |
| x | Fahrzeuglängsrichtung | z | Fahrzeughochrichtung |
| y | Fahrzeugquerrichtung | α | Winkel |

## Patentansprüche

1. X-Federeinrichtung (10) für eine Kraftfahrzeug-Radaufhängung, umfassend je Radseite:
- eine erste Blattfeder (11) und eine zweite Blattfeder (12) aus faserverstärktem Kunststoff, welche übereinanderliegend angeordnet sind, wobei die erste Blattfeder (11) mit einem Ende radseitig abstützbar ist und die zweite Blattfeder (12) mit einem Ende fahrzeugaufbauseitig abstützbar ist, und
- eine erste Befestigungseinrichtung (13), an welcher die erste Blattfeder (11) und die zweite Blattfeder (12) zusammengeführt und eingespannt sind, und welche ein Lager (16) zur fahrzeugaufbauseitigen schwenkbaren Lagerung aufweist,
**dadurch gekennzeichnet, dass**
die ersten Befestigungseinrichtungen (13) beider Radseiten durch eine Feder (17) untereinander derart verbunden sind, dass
entweder die ersten Blattfedern (11) beider Radseiten durch Teilabschnitte einer durchgehenden Blattfeder gebildet werden und die die ersten
Befestigungseinrichtungen (13) beider Radseiten verbindende Feder (17) durch einen Mittelabschnitt dieser durchgehenden Blattfeder gebildet wird, oder
die zweiten Blattfedern (12) beider Radseiten durch Teilabschnitte einer durchgehenden Blattfeder gebildet werden und die die ersten
Befestigungseinrichtungen (13) beider Radseiten verbindende Feder (17) durch einen Mittelabschnitt dieser durchgehenden Blattfeder gebildet wird.

2. X-Federeinrichtung (10) für eine Kraftfahrzeug-Radaufhängung nach Anspruch 1, **dadurch gekennzeichnet, dass** für den Fall, dass die ersten Blattfedern (11) beider Radseiten durch Teilabschnitte einer durchgehenden Blattfeder gebildet werden und bei Betrachtung der ersten Blattfeder (11) als untenliegende Blattfeder und der zweiten Blattfeder (12) als obenliegende Blattfeder, die durchgehende Blattfeder unter den Lagern (16) der ersten Befestigungseinrichtungen (13) beider Radseiten hindurchverläuft.

3. X-Federeinrichtung (10) für eine Kraftfahrzeug-Radaufhängung nach Anspruch 1, **dadurch gekennzeichnet, dass** für den Fall, dass die zweiten Blattfedern (12) beider Radseiten durch Teilabschnitte einer durchgehenden Blattfeder gebildet werden und bei Betrachtung der ersten Blattfeder (11) als untenliegende Blattfeder und der zweiten Blattfeder (12) als obenliegende Blattfeder, die durchgehende Blattfeder über den Lagern (16) der ersten Befestigungseinrichtungen (13) beider Radseiten hinwegverläuft.

4. X-Federeinrichtung (10) für eine Kraftfahrzeug-Radaufhängung nach einem der Ansprüche 1 bis 3, **dadurch gekennzeichnet, dass** die Feder (17) zwischen den ersten Befestigungseinrichtungen (13) beider Radseiten eine Taillierung (19) aufweist.

5. Kraftfahrzeug mit einer Kraftfahrzeug-Radaufhängung, die Kraftfahrzeug-Radaufhängung umfassend eine X-Federeinrichtung (10) nach einem der vorgenannten Ansprüche, wobei die ersten Blattfedern (11) sich jeweils in Fahrzeugquerrichtung erstrecken oder mit dieser bei Betrachtung in einer vertikalen Ebene einen Winkel von maximal +/-15° einschließen und/oder die ersten Blattfedern (11) in Ruhestellung des Fahrzeugs auf einer horizontalen Fläche horizontal verlaufen oder mit einer horizontalen Ebene einen Winkel von maximal +/- 10° einschließen.

## Claims

1. X-spring device (10) for a motor vehicle wheel suspension, each wheel side comprising:
- a first leaf spring (11) and a second leaf spring (12) made of fiber-reinforced plastics material, which are arranged one above the other, the first leaf spring (11) being supportable on the wheel side by means of one end and the second leaf spring (12) being supportable on the vehicle body side by means of one end, and
- a first fastening device (13) on which the first leaf spring (11) and the second leaf spring (12) are brought together and clamped, and which has a bearing (16) for pivotable mounting on the vehicle body side,
**characterized in that**
the first fastening devices (13) of both wheel sides are connected to one another by means of a spring (17) in such a way that
either the first leaf springs (11) of both wheel sides are formed of partial portions of a continuous leaf spring, and the spring (17) connecting the first fastening devices (13) of both wheel sides is formed of a central portion of said continuous leaf spring, or the second leaf springs (12) of both wheel sides are formed of partial portions of a continuous leaf spring, and the spring (17) connecting the first fastening devices (13) of both wheel sides is formed of a central portion of said continuous leaf spring.

2. X-spring device (10) for a motor vehicle wheel suspension according to claim 1, **characterized in that,** in the case that the first leaf springs (11) of both wheel sides are formed of partial portions of a continuous leaf spring, and when considering the first leaf spring (11) as a lower leaf spring and the second leaf spring (12) as an upper leaf spring, the continuous leaf spring extends under the bearings (16) of the first fastening devices (13) of both wheel sides.

3. X-spring device (10) for a motor vehicle wheel suspension according to claim 1, **characterized in that,** in the case that the second leaf springs (12) of both wheel sides are formed of partial portions of a continuous leaf spring, and when considering the first leaf spring (11) as a lower leaf spring and the second leaf spring (12) as an upper leaf spring, the continuous leaf spring extends over the bearings (16) of the first fastening devices (13) of both wheel sides.

4. X-spring device (10) for a motor vehicle wheel suspension according to any of claims 1 to 3, **characterized in that** the spring (17) has a waist (19) between the first fastening devices (13) of both wheel sides.

5. Motor vehicle having a motor vehicle wheel suspension, the motor vehicle wheel suspension comprising an X-spring device (10) according to any of the preceding claims, wherein the first leaf springs (11) in each case extend in the transverse direction of the vehicle or enclose therewith an angle of at most +/-15° when viewed in a vertical plane and/or the first leaf springs (11) extend horizontally on a horizontal surface in the parking position of the vehicle or enclose an angle of at most +/-10° with a horizontal plane.

## Revendications

1. Dispositif à ressorts en X (10) pour une suspension de roues de véhicule automobile, comprenant, pour chaque côté de roue :
- un premier ressort à lames (11) et un second ressort à lames (12) en matière plastique renforcée de fibres, lesquels ressorts à lames sont disposés l'un au-dessus de l'autre, dans lequel le premier ressort à lames (11) peut être en appui par une extrémité côté roue et le second ressort à lames (12) peut être en appui par une extrémité côté carrosserie de véhicule, et
- un premier dispositif de fixation (13) sur lequel le premier ressort à lames (11) et le second ressort à lames (12) sont réunis et serrés, et qui présente un palier (16) destiné à être monté côté carrosserie de véhicule de manière à pouvoir tourner,
**caractérisé en ce que**
les premiers dispositifs de fixation (13) des deux côtés de roue sont reliés entre eux par un ressort (17) de telle sorte que
soit les premiers ressorts à lames (11) des deux côtés de roue sont formés par des sections partielles d'un ressort à lames continu et le ressort (17) reliant les premiers dispositifs de fixation (13) des deux côtés de roue est formé par une section médiane dudit ressort à lames continu, soit les seconds ressorts à lames (12) des deux côtés de roue sont formés par des sections partielles d'un ressort à lames continu et le ressort (17) reliant les premiers dispositifs de fixation (13) des deux côtés de roue est formé par une section médiane dudit ressort à lames continu.

2. Dispositif à ressorts en X (10) pour une suspension de roues de véhicule automobile selon la revendication 1, **caractérisé en ce que,** dans le cas où les premiers ressorts à lames (11) des deux côtés de roue sont formés par des sections partielles d'un ressort à lames continu et en considérant le premier ressort à lames (11) comme un ressort à lames inférieur et le second ressort à lames (12) comme un ressort à lames supérieur, le ressort à lames continu évolue en dessous des paliers (16) des premiers dispositifs de fixation (13) des deux côtés de roue.

3. Dispositif à ressorts en X (10) pour une suspension de roues de véhicule automobile selon la revendication 1, **caractérisé en ce que,** dans le cas où les seconds ressorts à lames (12) des deux côtés de roue sont formés par des sections partielles d'un ressort à lames continu et en considérant le premier ressort à lames (11) comme un ressort à lames inférieur et le second ressort à lames (12) comme un ressort à lames supérieur, le ressort à lames continu évolue au-dessus des paliers (16) des premiers dispositifs de fixation (13) des deux côtés de roue.

4. Dispositif à ressorts en X (10) pour une suspension de roues de véhicule automobile selon l'une des revendications 1 à 3, **caractérisé en ce que** le ressort (17) présente une entaille (19) entre les premiers dispositifs de fixation (13) des deux côtés de roue.

5. Véhicule automobile comportant une suspension de roues de véhicule automobile, la suspension de roues de véhicule automobile comprenant un dispositif à ressorts en X (10) selon l'une des revendications précédentes, dans lequel les premiers ressorts à lames (11) s'étendent respectivement dans une direction transversale de véhicule ou forment avec celle-ci, en les considérant dans un plan vertical, un angle de +/- 15° au maximum et/ou les premiers ressorts à lames (11) évoluent horizontalement sur une surface horizontale dans une position de repos du véhicule ou forment avec un plan horizontal un angle de +/- 10° au maximum.
